(19) Europäisches Patentamt

European Patent Office

Office européen des brevets

(11) Veröffentlichungsnummer: **0 215 466 B1**

# (12) EUROPÄISCHE PATENTSCHRIFT

(45) Veröffentlichungstag der Patentschrift: **04.03.92**

(51) Int. Cl.⁵: **G06K 13/08**

(21) Anmeldenummer: **86112712.4**

(22) Anmeldetag: **15.09.86**

(54) Ver- und Entriegelungseinrichtung für einen Kartenleser.

(30) Priorität: **18.09.85 DE 3533301**

(43) Veröffentlichungstag der Anmeldung:
**25.03.87 Patentblatt 87/13**

(45) Bekanntmachung des Hinweises auf die
Patenterteilung:
**04.03.92 Patentblatt 92/10**

(84) Benannte Vertragsstaaten:
**AT CH DE LI**

(56) Entgegenhaltungen:
**DE-A- 3 518 247**
**FR-A- 2 552 252**
**US-A- 4 231 072**

(73) Patentinhaber: **SIEMENS AKTIENGESELL-
SCHAFT**
**Wittelsbacherplatz 2**
**W-8000 München 2(DE)**

(72) Erfinder: **Hansbauer, Hermann, Dipl.-Ing.**
**Kaspar-Kerll-Strasse 22**
**W-8000 München 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Ver- und Entriegelungseinrichtung gemäß den Merkmalen des Patentanspruchs 1.

Kartenleser sind in zahlreichen Ausführungsformen bekannt. Die Karte wird normalerweise auf einem längs verschiebbaren Aufnahmeteil gelagert und einer Auswerteeinrichtung zugeführt. Um eine fehlerfreie Auswertung der Karte zu erzielen, muß die Karte im Lesezustand exakt innerhalb des Kartenlesens fixiert sein. Dies wird beispielsweise durch mechanische (Herzkurven) oder elektromagnetische Mittel gelöst.

Eine bekannte Ausführungsform (DE-A-33 43 727) zeigt einen Kartenleser für Endgeräte, bei dem die Kartenaufnahme schubladenförmig gestaltet ist und durch einen Durchbruch in einer Fernsprechstation einschiebbar und im Bereich der Bodenwanne geführt und gehaltert ist. Im eingeschobenen Zustand der Kartenaufnahme hintergreift eine Nase eines mit der Aufnahme verbundenen Hebels die den Durchbruch begrenzende Gehäusewandung der Fernsprechstation und arretiert somit die Kartenaufnahme in der Lesestellung.

Dabei überragt der Hebel geringfügig die Außenkonturen der Fernsprechstation, so daß nach Beendigung des Lesevorgangs durch Niederdrükken des Hebels die Kartenaufnahme aus ihrer verriegelten Stellung herausgeführt werden kann.

Bei diesem Kartenleser muß es als nachteilig erachtet werden, daß zum Einlegen bzw. Herausnehmen der Karte die Kartenaufnahme zumindest teilweise aus der Fernsprechstation herausgezogen werden muß. Neben dem umständlichen und zeitraubenden Vorgang des Herausnehmens bzw. Einlegens der Karte besteht die Gefahr der Verschmutzung der für den Lesevorgang erforderlichen und in der Kartenaufnahme untergebrachten Kontakteinrichtungen.

Bei einer weiteren bekannten Ausführungsform (DE-A-34 42 397) wird der letztgenannte Nachteil dadurch vermieden, daß innerhalb einer feststehenden Aufnahme ein Schlitten längs verschiebbar geführt ist. Der die Kontakteinrichtungen für den Lesevorgang aufweisende Schlitten wird in der Lesestellung mechanisch mittels einer Herzkurvensteuerung oder elektrisch mittels eines Elektromagneten arretiert. Bei dieser Ausführungsform ist es als nachteilig anzusehen, daß die Karte im Lesezustand soweit aus dem Kartenleser herausragt, daß sie ohne Entriegelung des Schlittens, die z. B. bei einer Herzkurvenverriegelung durch erneuten Druck auf die Karte und damit bewirkter Freigabe des unter Federkraft stehenden Schlittens erfolgen kann, aus dem Kartenleser entfernbar ist. Dadurch gleiten die Kontaktfedern der Kontakteinrichtung über die empfindlichen Lesebereiche der Karte, was auf die Dauer zu einer unerwünschten Beschädigung und damit Unbrauchbarkeit der Karte führt.

Es sind daher Überlegungen angestellt worden, die Karte innerhalb des Kartenlesens während des Lesevorgangs durch Eingreifen von Stiften in entsprechende Bohrungen in der Karte zu arretieren. Diese Manipulationen an der Karte selbst sind jedoch weniger erwünscht, da die Karte universell und nicht für einen bestimmten Typ von Kartenleser Verwendung finden soll.

Durch die nicht vorveröffentlichte Patentanmeldung DE-A-35 18 247 ist es weiterhin bekannt daß die Karte während des Lesevorganges durch einen die Karte übergreifenden Haken eines Sperrhebels in der Weise arretiert ist, daß sie vom Benutzer nicht entnommen werden kann.

Für bestimmte Anwendungsfälle kann es wünschenswert sein, z. B. bei Beendigung des Lesevorganges, die Karte dem Benutzer automatisch zurückzugeben.

Es ist daher Aufgabe der Erfindung, die letztgenannte, intern bekannte Ver- und Entriegelungseinrichtung dahingehend zu erweitern, daß die Einrichtung benutzerfreundlicher wird.

Die Aufgabe der Erfindung wird gemäß den Merkmalen des Patentanspruchs 1 gelöst.

Eine derartige Anordnung hat den Vorteil, daß ohne aufwendige Änderung der vorhandenen Einrichtung eine elektrische Betätigung der Ver- und Entriegelungseinrichtung erfolgen kann.

Es ist bereits durch die FR-A 2 552 252 eine Kartenleseeinrichtung bekannt, in der eine Karte zum Auslesen der Daten in einem Chip in einer Halterung geschoben wird, wobei sie einen drehbar gelagerten Hebel beiseite drückt, der in der Endstellung der Karte ihr der Einschubseite zugewandtes Ende übergreift. Zur Freigabe der Karte wird der Hebel mittels eines Hubmagneten automatisch aus dem Pfad der Karte herausgedreht.

Eine vorteilhafte Weiterbildung besteht darin, daß der Auslösehebel einerseits fest mit einem Stößel des Hubmagneten verbunden ist und andererseits mit einem gabelförmig gestalteten Ende das den Haken abgewandte Ende des Sperrhebels umgreift.

Eine besonders günstige Lösung für die zwei voneinander unabhängigen Auslöseeinrichtungen ergibt sich dadurch, daß die Gabel des Auslösehebels derart bemessen ist, daß bei Betätigung der Taste deren Bewegung sich nicht auf den Auslösehebel überträgt.

Dadurch kann der Verschluß der beweglichen Teile auf ein Minimum beschränkt werden. Weiterhin wird bei Betätigung der Verund Entriegelungseinrichtung durch die Taste der erforderliche Kraftaufwand erheblich reduziert.

Die Erfindung soll im folgenden anhand eines Ausführungsbeispiels erläutert werden.

Es zeigen

Fig. 1 eine Prinzipdarstellung der Ver- und Entriegelungseinrichtung eines Kartenlesers im verriegelten Zustand der Karte,

Fig. 2 die Ver- und Entriegelungseinrichtung im entriegelten Zustand der Karte und

Fig. 3 eine weitere Möglichkeit zur Betätigung der Ver- und Entriegelungseinrichtung.

Die Ver- und Entriegelungseinrichtung für einen Kartenleser besteht im wesentlichen aus der Taste 1, dem schwenkbaren Sperrhebel 2, der in einem Lagerteil 3 einseitig gelagert ist und durch eine Druckfeder 4 beaufschlagt ist. Die Taste 1 ist durch eine weitere Druckfeder 5 beaufschlagt und besitzt eine Auflaufschräge 6, die mit einer am Sperrhebel 2 angeordneten Betätigungsnocke 7 zusammenarbeitet.

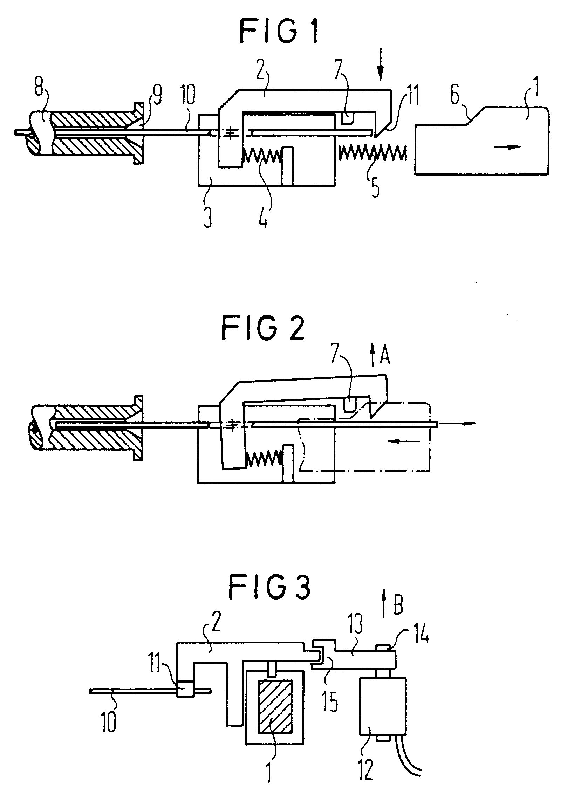

In dem in Fig. 1 gezeigten Zustand wird die in dem Kartenleser 8 eingeschobene Karte 10 von einem innerhalb des Kartenlesers verschiebbar entgegen der Federkraft gelagerten Schlitten aufgenommen. Im eingeschobenen Zustand der Karte 10 übergreift ein Haken 11 des Sperrhebels 2 ein freies Ende der Karte 10.

Wie in Fig. 2 dargestellt, läuft bei Betätigung der Taste 1 die an ihr vorgesehene Auflaufschräge 6 auf den Betätigungsnocken 7 auf, wodurch der Sperrhebel 2 in Pfeilrichtung A angehoben wird, wodurch die Karte freigegeben wird und aus dem Kartenleser entnommen werden kann.

Bei der in Fig. 3 dargestellten Anordnung ist die Ver- und Entriegelung der Karte mittels eines zusätzlich angebrachten Hubmagneten gezeigt, wobei die Darstellung die Anordnung in Richtung auf den Schlitz 9 des Kartenlesers 8 zeigt. Zusätzlich zur Taste 1 ist ein Hubmagnet 12 vorgesehen, der über einen Auslösehebel 13 die Ver- und Entriegelungseinrichtung betätigt. Dieser Auslösehebel 13 ist einerseits mit dem beweglichen Stößel 14 des Hubmagneten 12 fest verbunden, während sein freies Ende 15 gabelförmig gestaltet ist und ein Ende des Sperrhebels 2 umgreift. Die Fig. 3 zeigt den verriegelten Zustand der Karte 10. Wird der Hubmagnet 12 bei seiner Betätigung in Pfeilrichtung B bewegt, so wird der Haken 11 des Sperrhebels 2 soweit angehoben, daß die Karte 10 freigegeben wird.

Dabei ist der Hub des Magneten 12 so bemessen, daß bei alleiniger Betätigung der Taste 1 die Bewegung des Sperrhebels nicht auf den Hubmagneten übertragen wird. Dies wird durch eine entsprechende Bemessung des gabelförmigen Endes 15 des Auslösehebels ermöglicht, wobei im verriegelten Zustand der Karte das dem Haken 11 abgewandte Ende des Sperrhebels 2 an in der Darstellung unten befindlichen Gabelteil 15 anliegt, während zwischen dem anderen Gabelteil und dem genannten Ende des Sperrhebels ein derartiger Abstand besteht, daß bei Betätigung der Taste 1 nicht gleichzeitig der Hubmagnet mitbetätigt wird.

## Patentansprüche

1. Ver- und Entriegelungseinrichtung für eine in einen Kartenleser (8) einschiebbare Karte (10), wobei die Karte (10) über einen Aufnahmeschlitz (9) dem Kartenleser zugeführt und durch Federkraft ausgestoßen wird und wobei die Ver- und Entriegelungseinrichtung durch einen im Ruhezustand in den Aufnahmeschlitz (9) ragenden und diesen zumindest teilweise versperrenden Haken (11) eines Sperrhebels (2) gebildet ist, wobei der Haken (11) die Karte (10) im Lesezustand übergreift und mittels einer auf den Sperrhebel (2) mechanisch einwirkenden Taste (1) aus dem Aufnahmeschlitz (9) entfernbar ist, wobei zusätzlich zu der Taste (1) ein Hubmagnet (12) angeordnet ist, der unabhängig von der Betätigung der Taste (1) über einen Auslösehebel (13) zur Freigabe der Karte auf den Sperrhebel (2) einwirkt.

2. Ver- und Entriegelungseinrichtung nach Anspruch 1, **dadurch gekennzeichnet,** daß der Auslösehebel (13) einerseits fest mit einem Stößel (14) des Hubmagneten (12) verbunden ist und andererseits mit einem gabelförmig gestalteten Ende (15) das dem Haken (11) abgewandte Ende des Sperrhebels 2 umgreift.

3. Ver- und Entriegelungseinrichtung nach Anspruch 1 und 2, **dadurch gekennzeichnet,** daß die Gabel (15) des Auslösehebels (13) derart bemessen ist, daß bei Betätigung der Taste (1) deren Bewegung sich nicht auf den Auslösehebel (13) überträgt.

## Claims

1. Locking and unlocking device for a card (10) which can be inserted into a card reader (8), the card (10) being fed to the card reader via a receiving slot (9) and ejected by spring force and the locking and unlocking device being formed by a hook (11) of a blocking lever (2), which hook projects into the receiving slot (9) in the position of rest and at least partially blocks the said slot, said hook engaging over the card (10) at the reading stage and it being possible to remove it from the receiving slot (9) by means of a key (1) which acts mechanically on the blocking lever (2), there being arranged in addition to the key (1) a lifting magnet (12) which independently of the actuation of the key (1) acts on the blocking lever (2) via a releasing lever (13) in order to release the card.

2. Locking and unlocking device according to Claim 1, characterised in that the releasing lever (13) is on the one hand permanently connected to a tappet (14) of the lifting magnet (12) and on the other hand engages with a fork-shaped end (15) around the end of the blocking lever (2) facing away from the hook (11).

3. Locking and unlocking device according to Claim 1 and 2, characterised in that the fork (15) of the releasing lever (13) is dimensioned in such a way that when the key (1) is actuated its movement is not transmitted to the releasing lever (13).

**Revendications**

1. Dispositif de verrouillage et de déverrouillage pour une carte (10) pouvant être insérée dans un lecteur de cartes (8), dans lequel la carte (10) est envoyée au lecteur de cartes par l'intermédiaire d'une fente de réception (9) et est éjectée par la force d'un ressort, le dispositif de verrouillage et de déverrouillage étant formé par un crochet (11) d'un levier de blocage (2), qui, à l'état de repos, pénètre dans la fente de réception (9) et bloque au moins en partie cette dernière, et dans lequel le crochet (11) s'engage par-dessus la carte (10) lors de la lecture et peut être dégagé de la fente de réception (9) au moyen d'une touche (1) actionnant mécaniquement le levier de blocage (2), et dans lequel il est prévu, en plus de la touche (1), un aimant de levage (12), qui, indépendamment de l'actionnement de la touche (1), actionne le levier de blocage (2) par l'intermédiaire d'un levier de déclenchement (13) pour libérer la carte.

2. Dispositif de verrouillage et de déverrouillage suivant la revendication 1, caractérisé par le fait que le levier de déclenchement (13) est, d'une part, raccordé fermement à un poussoir (14) de l'aimant de levage (12) et entoure, d'autre part, par une extrémité en forme de fourche (15), l'extrémité du levier de blocage (2), tournée à l'opposé du crochet (11).

3. Dispositif de verrouillage et de déverrouillage suivant les revendications 1 et 2, caractérisé par le fait que la fourche (15) du levier de déclenchement (13) est dimensionnée de telle sorte que lors de l'actionnement de la touche (1), son déplacement n'est pas transmis au levier de déclenchement (13).

# FIG 1

# FIG 2

# FIG 3